# FASCICULE DE BREVET EUROPEEN

(11) **EP 0 681 345 B1**
(45) Date de publication et mention de la délivrance du brevet: **08.07.1998**
(21) Numéro de dépôt: 95400927.0
(22) Date de dépôt: 25.04.1995
(51) Int. Cl.: H01R 13/28

(54) **Organe de contact électrique hermaphrodite**
Hermaphroditisches elektrisches Kontaktelement
Hermaphroditic electrical contact member

(30) Priorité: 03.05.1994 FR 9405384
(43) Date de publication de la demande: 08.11.1995
(73) Titulaire: CONNECTEURS CINCH, F-78190 Montigny Le Bretonneux (FR)
(72) Inventeur: Duclos, Jean-Louis, F-78330 Elancourt (FR)
(74) Mandataire: Faber, Jean-Paul

(56) Documents cités:
- EP-A- 0 152 312
- EP-A- 0 463 608
- FR-A- 2 647 602
- US-A- 5 281 175

## Description

La présente invention se rapporte à un organe de contact électrique hermaphrodite.

L'invention vise un organe de contact électrique présentant un corps en forme de canal à section rectangulaire dont une extrémité comporte des moyens pour sa fixation à un conducteur électrique, tandis que l'autre extrémité est destinée à coopérer avec un organe identique tourné tête-bêche sens dessus dessous.

On connaît divers organes de ce type. Le brevet français n° 2 559 624 décrit un tel organe de contact qui comprend un canal délimité par une paroi de plancher, deux parois latérales et une paroi de plafond, la paroi de plancher étant prolongée par un barreau présentant une première section pliée dans le canal et appliquée contre la paroi de plancher pour former une languette mâle, une seconde section inclinée du côté opposé au plancher et une troisième section pliée en épingle à cheveux pour former une barrette élastique de coincement.

Un tel organe assure de bonnes liaisons électriques mais il est coûteux car la longueur du barreau est telle que, lors du découpage dans un flan métallique, la perte est importante.

De plus, l'épaisseur de la partie formant la languette mâle est souvent insuffisante et celle-ci est peu rigide. Enfin, du fait de sa grande longueur, la barrette élastique de coincement manque de force élastique.

L'un des buts de la présente invention est de remédier à ces inconvénients.

L'organe de contact électrique hermaphrodite, selon l'invention, est du type comprenant un corps affectant une section rectangulaire pour former un canal avec, à une extrémité, des moyens pour la fixation d'un conducteur électrique, ledit corps présentant une paroi de plancher prolongée du côté opposé aux moyens de fixation du conducteur électrique, pour former une languette mâle, deux parois latérales et une paroi de plafond, une languette élastique de coincement s'étendant dans ledit canal, la paroi de plafond étant formée par un prolongement de chacune des parois latérales, chaque prolongement étant plié de manière à s'étendre parallèlement à la paroi de plancher dans un même plan, ledit organe étant caractérisé en ce que l'un au moins desdits prolongements est relié par une patte à un point intermédiaire de la longueur de la languette élastique de coincement celle-ci étant, le long de ladite patte, repliée pour s'étendre à l'intérieur du canal et cambrée pour être dirigée, par son extrémité libre, vers la languette mâle, la paroi de plancher, à son extrémité libre, étant prolongée par un barreau rabattu contre la face externe dudit plancher.

De préférence, la barrette élastique de coincement, du côté des moyens de fixation à un conducteur électrique, est prolongée par une plaquette qui est pliée pour épouser la face interne des parois latérales et la paroi de plancher afin d'obturer le canal. Ainsi, on ferme le canal pour limiter l'engagement du conducteur électrique et également pour empêcher une matière d'étanchéité de couler dans ledit canal lorsqu'on réalise des connecteurs étanches.

De préférence, la paroi de plafond comporte un embouti formant une saillie à l'intérieur du canal et contre lequel bute la barrette élastique de coincement, ledit embouti étant disposé au voisinage de la patte du côté opposé aux moyens de fixation du conducteur électrique. Ainsi on augmente l'action élastique de la barrette et on peut, en fonction de la position ou de la profondeur dudit embouti régler la déflection de la barrette.

On peut prévoir une ouverture dans la paroi de plancher débordant sur une paroi latérale afin de permettre la prise d'un organe de fixation complémentaire.

De préférence, le barreau et la partie de la paroi de plancher correspondante sont emboutis afin de les rigidifier.

Suivant une variante de réalisation, chaque prolongement, le long de son bord libre, est relié par une patte à une languette élastique de coincement, celle-ci étant repliée contre la face interne du prolongement correspondant et cambrée pour s'étendre en direction de la languette mâle, celle-ci étant formée par un barreau prolongeant l'extrémité libre de la paroi de plancher, ledit barreau étant rabattu contre la face externe dudit plancher. Ainsi, on réalise un organe de contact électrique présentant deux barrettes élastiques de coincement ce qui améliore la liaison électrique.

L'invention va maintenant être décrite avec plus de détails en se référant à des modes de réalisation particuliers donnés à titre d'exemple seulement et représentés aux dessins annexés, dans lesquels :

Figure 1 est une vue en plan montrant le découpage d'un flan métallique pour la réalisation de l'organe de contact électrique hermaphrodite, selon l'invention.

Figure 2 est une vue en plan de l'organe réalisé à partir du flan de la figure 1.

Figure 3 est une vue en coupe suivant la ligne 3-3 de la figure 2.

Figure 4 est une vue en coupe suivant la ligne 4-4 de la figure 3.

Figure 5 est une vue en élévation.

Figure 6 est une vue en coupe suivant la ligne 6-6 de la figure 5.

Figure 7 est une vue en coupe suivant la ligne 7-7 de la figure 5.

Figure 8 est une vue en coupe suivant la ligne 8-8 de la figure 5.

Figure 9 est une vue en coupe correspondant à la figure 3 montrant deux organes assemblés.

Figure 10 est une vue en plan montrant le découpage d'un flan métallique pour la réalisation d'un organe de contact électrique hermaphrodite suivant une variante de réalisation de l'invention.

Figure 11 est une vue en plan de l'organe réalisé à partir du flan de la figure 10.

Figure 12 est une vue en coupe suivant la ligne 12-12 de la figure 11.

Figure 13 est une vue en coupe suivant la ligne 13-13 de la figure 12.

Figure 14 est une vue en élévation avec des arrachements partiels de l'organe de contact suivant la variante de réalisation.

Figure 15 est une vue en coupe suivant la ligne 15-15 de la figure 14.

Figure 16 est une vue en coupe suivant la ligne 16-16 de la figure 14.

Figure 17 est une vue en coupe suivant la ligne 17-17 de la figure 14.

Figure 18 est une vue en coupe suivant la ligne 18-18 de la figure 14.

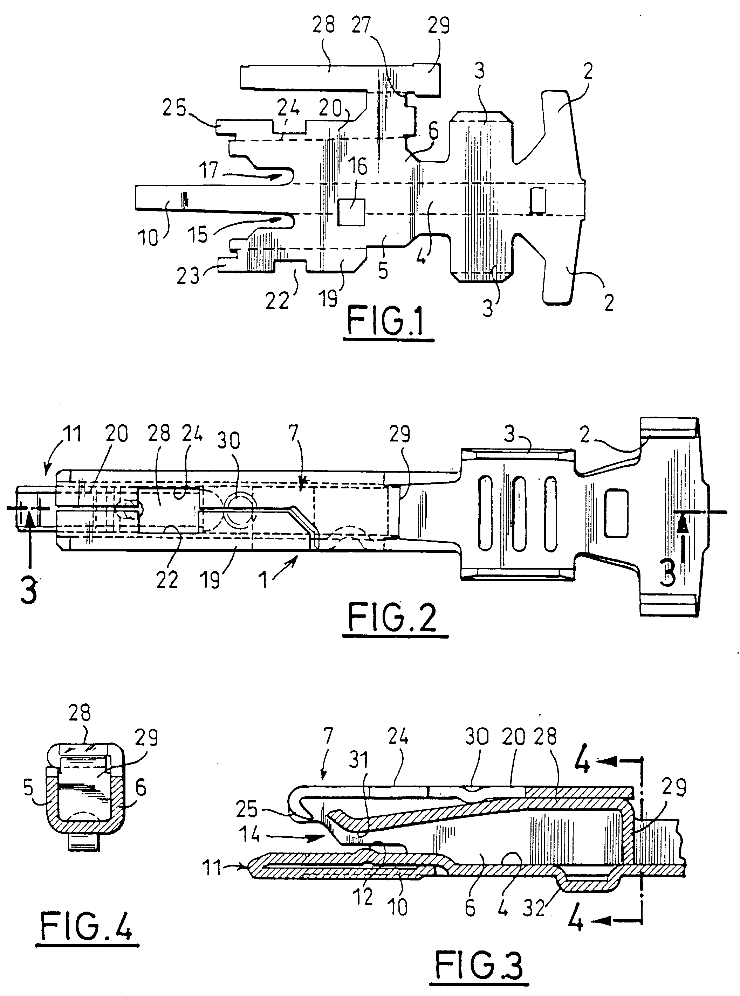

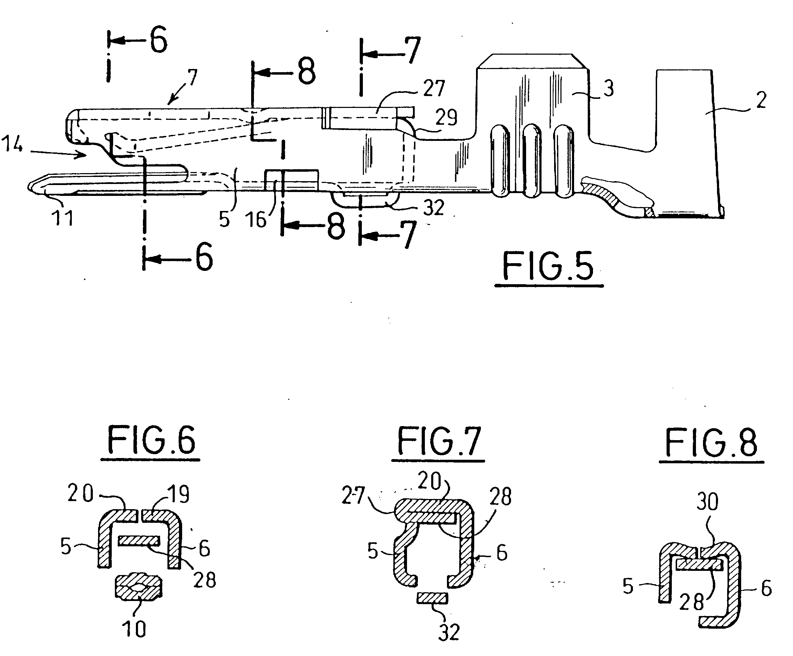

Les figures 1 à 9 représentent un premier mode de réalisation de l'invention.

L'organe de contact électrique est réalisé à partir d'un flan métallique bon conducteur de l'électricité et doué d'une certaine élasticité.

Le flan est découpé pour présenter un corps 1 avec, à une extrémité, des pattes 2 destinées à enserrer un conducteur électrique logé dans une gaine isolante et des pattes 3 destinées à être serties sur une extrémité dénudée dudit conducteur.

Le flan est plié pour présenter une paroi de plancher 4, deux parois latérales 5 et 6 et une paroi de plafond 7 de manière à former un canal 14 à section rectangulaire.

La paroi de plancher 4 est prolongée vers l'avant par un barreau 10 qui est rabattu contre la face externe dudit plancher, les parties, au contact de la paroi de plancher et du barreau, étant embouties pour les rigidifier et former une languette mâle 11 avec un bossage 12 tourné vers l'intérieur du canal 14.

La paroi latérale 5, du côté du barreau 10, comporte une échancrure 15 et la paroi latérale 6 une échancrure correspondante 17.

Dans la paroi de plancher 4 et dans la paroi latérale 5, il est pratiqué une ouverture 16 pour la fixation de l'organe dans un élément de boîtier.

La paroi latérale 5, du côté opposé à la paroi de plancher 4, comporte un prolongement 19 qui forme une partie de la paroi de plafond 7, ledit prolongement présentant, le long de son bord libre, une encoche 22.

La paroi latérale 6, du côté opposé à la paroi de plancher 4, est pourvue d'un prolongement 20 qui forme la partie complémentaire de la paroi de plafond 7, ledit prolongement présentant, le long de son bord libre, une encoche 24 qui forme avec l'encoche 22 une ouverture pour la fixation de l'organe dans un élément de boîtier.

Les prolongements 19 et 20, du côté opposé aux pattes de sertissage 2 et 3, sont terminés par des guides 23 et 25 respectivement destinés à être repliés vers l'intérieur du canal 14.

Le prolongement 20, le long de son bord libre et du côté opposé au guide 25, comporte une patte 27 reliant ledit prolongement 20 à une barrette élastique de coincement 28.

La languette de coincement 28, du côté des pattes de sertissage 2 et 3, comporte une plaquette 29 et, au droit du bossage 12, un bossage 31.

Il est prévu un organe de détrompage 32 formé par une saillie de la paroi de plancher 4 afin d'éviter une mauvaise introduction de l'organe de contact dans le logement d'un boîtier.

Comme on le voit aux figures, la partie 27 est pliée de manière que la barrette élastique de coincement s'étende à l'intérieur du canal 14, la plaquette 29 étant pliée à angle droit pour obturer le canal, tandis que ladite barrette de coincement 28 est cambrée pour s'étendre en direction de la languette 11.

Il est formé sur la paroi de plafond 7 un embouti 30 pour renforcer l'action élastique de la barrette 28.

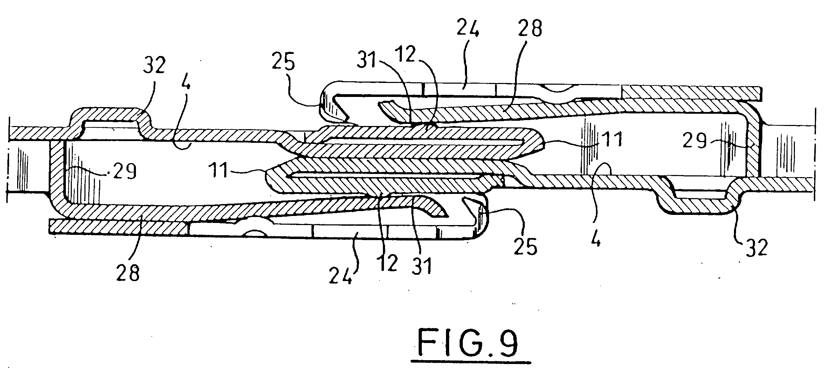

L'organe (voir figure 9) est destiné à coopérer avec un organe identique tourné tête-bêche, sens dessus dessous, la languette mâle 11 de chacun des organes venant s'insérer dans le canal 14 entre la languette mâle 11 de l'autre organe et la barrette élastique de coincement 28. Les guides 24 et 25 s'opposent à l'introduction d'une languette dont l'épaisseur serait supérieure à celle admise, facilitent l'introduction de cette dernière et protègent la barrette 28.

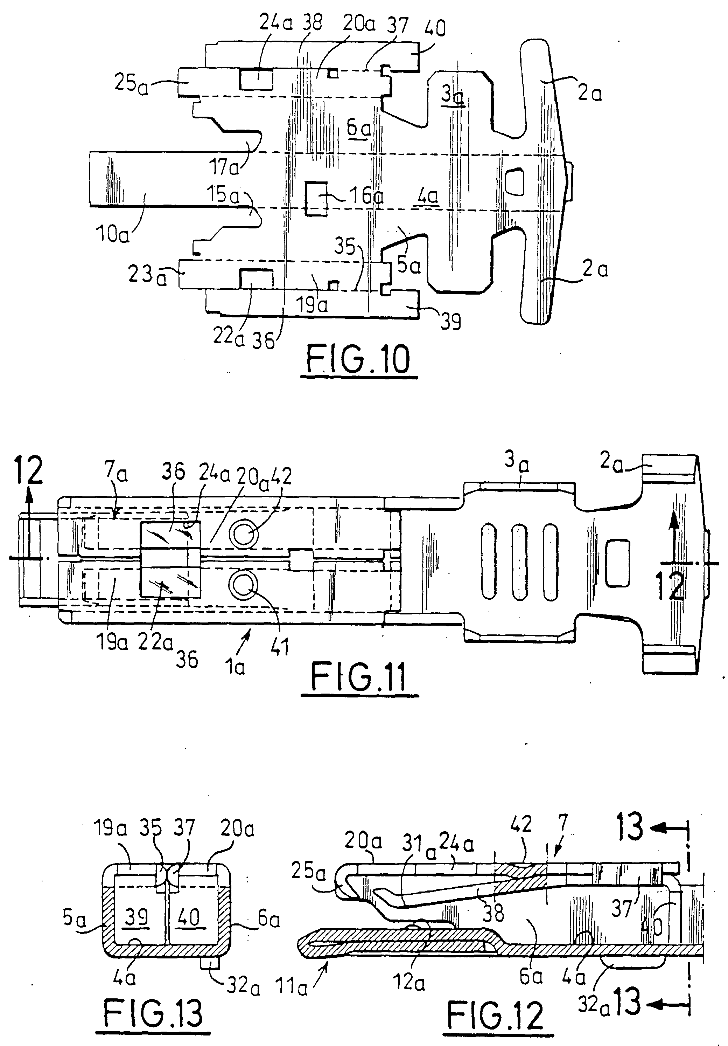

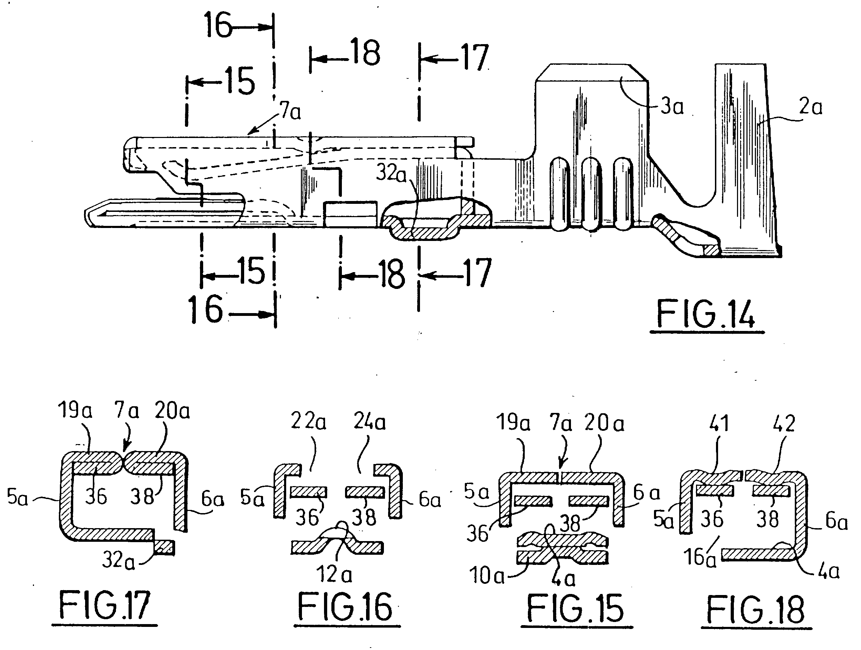

Aux figures 10 à 18, on a représenté une variante de réalisation de l'invention.

Sur ces figures, on a reporté les références portées sur les figures précédentes pour désigner les parties correspondantes mais affectées de la lettre "a".

Dans ce mode de réalisation, le prolongement 19a est relié par une patte 35 à une barrette élastique de coincement 36, tandis que le prolongement 20a est pourvu d'une patte 37 solidaire d'une barrette élastique de coincement 38.

Les barrettes 36 et 38 sont repliées à l'intérieur du canal 14a et convenablement cambrées.

Les barrettes 36 et 38, du côté des pattes de sertissage 2a et 3a, sont pourvues respectivement de plaquettes 39 et 40 pliées pour former le canal 14.

Le prolongement 19a et le prolongement 20a comportent, chacun, un embouti 41 et 42 respectivement coopérant le premier avec la barrette 36 et le second avec la barrette 38.

L'organe de contact électrique hermaphrodite, selon cette variante de réalisation, s'utilise de la même manière que celui de la figure précédente, tête-bêche sens dessus dessous, chaque languette lla d'un organe venant s'insérer entre la languette lla de l'autre organe et les deux barrettes élastiques de coincement 36 et 38.

Bien entendu, l'invention n'est pas limitée aux modes de réalisation qui viennent d'être décrits et représentés. On pourra y apporter de nombreuses modifications de détail sans sortir pour cela du cadre de l'invention.

## Revendications

1. Organe de contact électrique hermaphrodite du type comprenant un corps (1) affectant une section rectangulaire pour former un canal (14) avec, à une extrémité, des moyens (2, 3) pour la fixation d'un conducteur électrique, ledit corps (1) présentant une paroi de plancher (4) prolongée, du côté opposé aux moyens (2, 3) de fixation du conducteur électrique, pour former une languette mâle (11), deux parois latérales (5 et 6) et une paroi de plafond (7), une languette élastique de coincement s'étendant dans ledit canal (14), la paroi de plafond (7) étant formée par un prolongement (19, 20) de chacune des parois latérales (5, 6), chaque prolongement (19, 20) étant plié de manière à s'étendre parallèlement à la paroi de plancher (4) dans un même plan, caractérisé en ce que l'un, au moins, desdits prolongements est relié par une patte (27) à un point intermédiaire de la longueur de la languette élastique de coincement (28), celle-ci étant, le long de ladite patte (27), repliée pour s'étendre à l'intérieur du canal (14) et cambrée pour être dirigée, par son extrémité libre, vers la languette mâle (11), la paroi de plancher (4), à son extrémité libre étant prolongée par un barreau (10) rabattu contre la face externe dudit plancher (4).

2. Organe de contact électrique hermaphrodite, selon la revendication 1, caractérisé en ce que la barrette élastique de coincement (28), du côté des moyens de fixation d'un conducteur électrique (2, 3), est prolongée par une plaquette (29) qui est pliée pour épouser la face interne des parois latérales (5, 6) et la paroi de plancher (4) afin d'obturer le canal (14).

3. Organe de contact électrique hermaphrodite, selon la revendication 1, caractérisé en ce que la paroi de plafond (7) comporte un embouti (30) formant une saillie à l'intérieur du canal et contre lequel bute la barrette élastique de coincement (28), ledit embouti (30) étant disposé au voisinage de la patte (27) du côté opposé aux moyens (2, 3) de fixation du conducteur électrique.

4. Organe de contact électrique hermaphrodite, selon la revendication 1, caractérisé en ce que la paroi de plancher (4) comporte une ouverture (16) débordant sur l'une des parois latérales (5).

5. Organe de contact électrique hermaphrodite, selon la revendication 1, caractérisé en ce que le barreau (10) et la partie de la paroi de plancher correspondante sont emboutis.

6. Organe de contact électrique hermaphrodite, selon la revendication 1, caractérisé en ce que chaque prolongement (19a, 20a), le long de son bord libre, est relié par une patte (35, 37) à une languette élastique de coincement (36, 38), celle-ci étant repliée contre la face interne du prolongement correspondant et cambrée pour s'étendre en direction de la languette mâle (11a), celle-ci étant formée par un barreau (10a) prolongeant l'extrémité libre de la paroi de plancher (4a), ledit barreau (10a) étant rabattu contre la face externe dudit plancher (4a).

## Patentansprüche

1. Zwitterartiges elektrisches Kontaktorgan, das einen Körper (1) afuweist, der einen rechteckigen Querschnitt für die Bilclung eines Kanales (14) mit an einem Ende befindlichen Mitteln für die Befestigung eines elektrischen Leiters besitzt, wobei genannter Körper (1) eine Bodenwand (4), die an der den Mitteln (2, 3) für die Befestigung des elektrischen Leiters entgegengesetzten Seite verlängert ist, um eine Steckerzunge (11) zu bilden, zwei Seitenwände (5 und 6) und eine Deckwand (7) aufweist, wobei sich eine federnde Klemmleiste in dem genannten Kanal (14) erstreckt, die Deckwand (7) durch eine Verlängerung (19, 20) jeder der Seitenwände (5, 6) gebildet ist und jede Verlängerung (19, 20) so gebogen ist, daß sie sich parallel zur Bodenwand (4) in gleicher Ebene erstrecken, dadurch gekennzeichnet, daß zumindest eine der genannten Verlängerungen über eine Lasche (27) an einer innerhalb der Länge der federnden Klemmleiste (28) gelegenen Stelle mit dieser verbunden ist, welche längs der genannten Lasche (27) so umgelegt ist, daß sie sich ins Innere des Kanales (14) erstreckt, und so gekrümmt ist, daß sie sich mit ihrem freien Ende gegen die Steckerzunge (11) hin erstreckt, wobei die Bodenwand (4) an ihrem freien Ende durch eine Leiste (10) verlängert ist, die gegen die Außenseite des genannten Bodens (4) hin umgelegt ist.

2. Zwitterartiges elektrisches Kontaktorgan nach Anspruch 1, dadurch gekennzeichnet, daß die federnde Klemmleiste (28) auf der Seite der Mittel (2, 3) zur Befestigung eines elektrischen Leiters durch eine Platte (29) verlängert ist, die so umgebogen ist, daß sie an der Innenseite der Seitenwände (5, 6) und an der Bodenwand (4) anliegt, um den Kanal (14) zu verschließen.

3. Zwitterartiges elektrisches Kontaktorgan nach Anspruch 1, dadurch gekennzeichnet, daß die Deckwand (7) eine Einprägung (30) aufweist, die einen Vorsprung ins Innere des Kanales bildet, gegen den sich die federnde Klemmleiste (28) abstützt, wobei genannte Einprägung in der Nähe der Lasche (27) auf der zu den Mitteln (2, 3) zur Befestigung des elektrischen Leiters entgegengesetzten Seite angeordnet ist.

4. Zwitterartiges elektrisches Kontaktorgan nach Anspruch 1, dadurch gekennzeichnet, daß die Bodenwand (4) eine Öffnung (16) aufweist, die sich bis in eine der Seitenwände (5) hinein erstreckt.

5. Zwitterartiges elektrisches Kontaktorgan nach Anspruch 1, dadurch gekennzeichnet, daß die Leiste (10) und der entsprechende Teil der Bodenwand mit einer Einprägung versehen sind.

6. Zwitterartiges elektrisches Kontaktorgan nach Anspruch 1, dadurch gekennzeichnet, daß jede Verlängerung (19a, 20a) längs ihres freien Randes über eine Lasche (35, 37) mit einer federnden Klemmleiste (36, 38) verbunden ist, welche gegen die Innenseite der entsprechenden Verlängerung umgebogen und so gekrümmt sind, daß sie sich in Richtung der Steckerzunge (11a) erstrecken, welche durch eine Leiste (10a) gebildet ist, die das freie Ende der Bodenwand (4a) verlängert, welch genannte Leiste (10a) gegen die Außenseite des genannten Bodens (4a) hin umgelegt ist.

## Claims

1. A hermaphrodite electrical contact member of the type comprising
a body (1) which assumes a rectangular section to form a channel (14) having at one end means (2, 3) of attachment of an electrical conductor, the said body (1) exhibiting at the side opposite the means (2, 3) of attachment of the electrical conductor a bottom wall (4) which is elongated to form a small male tongue (11), two sidewalls (5 and 6) and a top wall (7), whilst a small elastic wedge tongue extends into the said channel (14), the top wall (7) being formed by a prolongation (19, 20) from each of the sidewalls (5, 6), each prolongation (19, 20) being folded so that it extends in one and the same plane in parallel with the bottom wall (4), characterized in that
at least one of the said prolongations is connected by a tab (27) to an intermediate point in the length of the small elastic wedge tongue (28), the latter being folded back along the said tab (27) to extend inside the channel (14) and arched in order to be directed by its free end towards the small male tongue (11), the bottom wall (4) being prolonged at its free end by a small bar (10) which is folded back against the outer face of the said bottom wall (4).

2. A hermaphrodite electrical contact member as in Claim 1,
characterized in that the small elastic wedge bar (28), at the side having the means (2, 3) of attachment of an electrical conductor, is prolonged by a small plate (29) which is folded to fit against the inner faces of the sidewalls (5, 6) and the bottom wall (4) in order to block the channel (14).

3. A hermaphrodite electrical contact member as in Claim 1,
characterized in that the top wall (7) includes an indent (30) which forms inside the channel a projection against which the small elastic wedge bar (28) butts, the said indent (30) being arranged in the vicinity of the tab (27) at the side opposite the means (2, 3) of attachment of the electrical conductor.

4. A hermaphrodite electrical contact member as in Claim 1,
characterized in that the bottom wall (4) includes an opening (16) extending into one of the sidewalls (5).

5. A hermaphrodite electrical contact member as in Claim 1,
characterized in that the small bar (10) and the corresponding portion of the bottom wall are indented.

6. A hermaphrodite electrical contact member as in Claim 1,
characterized in that each prolongation (19a, 20a) is connected along its free edge by a tab (35, 37) to a small elastic wedge tongue (36, 38), the latter being folded back against the inner face of the corresponding prolongation and arched in order to extend in the direction of the small male tongue (11a), the latter being formed by a small bar (10a) which prolongs the free end of the bottom wall (4a), the said small bar (10a) being folded back against the outer face of the said bottom wall (4a).
